# EUROPÄISCHE PATENTSCHRIFT

(11) **EP 2 401 131 B1**
(45) Veröffentlichungstag und Bekanntmachung des Hinweises auf die Patenterteilung: **10.07.2013**
(21) Anmeldenummer: 10709453.4
(22) Anmeldetag: 24.02.2010
(51) Int. Cl.: B29C 49/00, B29C 33/00

(54) **MIKROSTRUKTURIERTES VERBUNDBAUTEIL SOWIE VERFAHREN UND VORRICHTUNG ZU DESSEN HERSTELLUNG**
MICROSTRUCTURED COMPOSITE COMPONENT AND METHOD AND DEVICE FOR PRODUCING THE SAME
ÉLÉMENT COMPOSITE MICROSTRUCTURÉ ET SON PROCÉDÉ ET SON DISPOSITIF DE PRODUCTION

(30) Priorität: 27.09.2009 DE 102009044112
(43) Veröffentlichungstag der Anmeldung: 04.01.2012
(73) Patentinhaber: Technische Universität Ilmenau, 98693 Ilmenau (DE)
(72) Erfinder: SCHOBER, Andreas, 90762 Fürth (DE); GROSS, Alexander, 64832 Babanhausen (DE); HAMPL, Jörg, 99087 Erfurt (DE)
(74) Vertreter: Engel, Christoph Klaus
(86) Internationale Anmeldenummer: PCT/EP2010/052346
(87) Internationale Veröffentlichungsnummer: WO 2011/035936

(56) Entgegenhaltungen:
- EP-A1- 0 545 055
- EP-A1- 0 745 471
- EP-A2- 0 652 099
- DE-U1- 29 711 763
- DATABASE WPI Week 198647 Thomson Scientific, London, GB; AN 1986-309202 XP002592077 -& JP 61 228929 A (KYORAKU CO LTD) 13. Oktober 1986 (1986-10-13)

## Beschreibung

Die vorliegende Erfindung betrifft ein Verfahren zur Herstellung eines mikrostrukturierten Verbundbauteiles, welches beispielsweise mikrofluidische Strukturen für die Durchführung von fluidischen Prozessen in chemischen, biologischen oder medizinischen Anwendungen aufweist. Die Erfindung betrifft im Weiteren eine Vorrichtung zur Herstellung mikrostrukturierter Verbundbauteile sowie ein mikrostrukturiertes Verbundbauteil.

Aus der DE 197 01 568 C1 ist ein Verfahren zur Herstellung einer strukturierten Schicht bekannt, die aus einem Formstoff und einem Hilfssubstrat besteht. Der Formstoff besteht aus einem Thermoplast und wird vor dem Bearbeiten oberhalb der Glastemperatur erhitzt. Das Hilfssubstrat besteht aus einer mechanisch stabilen und temperaturbeständigen Stahlplatte. Nach einem Prägevorgang wird das wieder abgetrennte Hilfssubstrat durch ein gekrümmtes und/oder strukturiertes Substrat ausgetauscht.

Die DE 199 24 005 A1 zeigt ein Verfahren zur Herstellung von Mukrostruktwrkörpern aus einem thermoplastischen Kunststoff. Zunächst wird eine Verbundschicht aus zwei unterschiedlichen Schichten jeweils eines thermoplastischen Kunststoffs hergestellt. Die erste Schicht stellt eine Prägeschicht dar, während die zweite Schicht aus einem von der Prägeschicht wieder lösbaren Material besteht. Die Prägeschicht wird mit einem stempelartigen Abformwerkzeug, welches auf einer ebenen Grundplatte mikrostrukturierte Vorsprünge aufweist, in der Weise geprägt, dass die Vorsprünge die Prägeschicht durchstoßen und in die zweite Schicht hineinragen. Anschließend wird die geprägte Verbundschicht aus dem Abformwerkzeug entnommen und die Prägeschicht von der zweiten Schicht getrennt.

Die DE 101 34 040 A1 zeigt ein Verfahren zur Herstellung von mikrofluidischen Hohlstrukturen aus Kunststoff. In einer Warmumformmaschine oder einer Heißprägepresse wird eine thermoplastische Kunststofffolie in einem einzigen Prozesszyklus durch ein gasförmiges oder ein flüssiges Druckmedium zu fluidischen Mikrostrukturen thermogeformt. Gleichzeitig wird die Kunststofffolie mit einem starren oder starrflexiblen, nicht zu thermoformenden Substrat durch Einwirkung von Temperatur und Druck verbunden.

Die EP 0 545 055 A1 zeigt ein Verfahren zur Herstellung von Produkten aus glasfaserverstärkten thermoplastischen Folien. Bei diesem Verfahren werden zwei glasfaserverstärkte thermoplastische Folien zunächst erwärmt und anschließend zwischen zwei Formbauteilen angeordnet. Auf den Folien befindet sich jeweils eine vakuumbeständige filmartige Sperrschicht. Die beiden Sperrschichten werden zwischen den thermoplastischen Folien angeordnet. Zwischen die beiden Sperrschichten wird ein Überdruck eingebracht, sodass die Folien mit den Sperrschichten in die Formbauteile eingeformt werden. Die Sperrschichten verhindern zudem, dass die Folien dort miteinander verbunden werden oder miteinander verschweißt werden, wo dies nicht gewünscht ist. An den nicht durch die Sperrschichten bedeckten Randbereichen der Folien werden die beiden Folien miteinander verschweißt.

Die Aufgabe der vorliegenden Erfindung besteht ausgehend vom Stand der Technik darin, verbesserte mikrostrukturierte Bauteile bereitzustellen, die insbesondere für mikrofluidische Anwendungen geeignet sind und die auch bei Ausführungen mit komplexen Strukturen oder mit zusätzlichen Funktionselementen aufwandsarm herstellbar sind. Es sind ein entsprechendes Verfahren und eine Vorrichtung für die Herstellung der verbesserten mikrostrukturierten Bauteile anzugeben.

Die genannte Aufgabe wird durch ein Verfahren zur Herstellung eines mikrostrukturierten Verbundbauteiles gemäß dem beigefügten Anspruch 1 gelöst. Die Aufgabe wird weiterhin durch eine Vorrichtung zur Herstellung mikrostrukturierter Verbundbauteile gemäß dem beigefügten nebengeordneten Anspruch 8 gelöst. Die Erfindung sieht ferner ein mikrostrukturiertes Verbundbauteil gemäß dem beigefügten nebengeordneten Anspruch 12 vor.

Das erfindungsgemäße Verfahren dient der Herstellung eines mikrostrukturierten Verbundbauteiles, beispielsweise eines Verbundbauteils mit mikrofluidischen Funktionsstrukturen für die Anwendung in fluidischen Prozessen. Das Verfahren umfasst zunächst einen Schritt, bei welchem eine erste Folie über einer zweiten Folie zwischen einem ersten Formbauteil und einem zweites Formbauteil angeordnet wird. Diese Anordnung kann beispielsweise derart erfolgen, dass die zweite Folie auf das zweite Formbauteil und die erste Folie auf die zweite Folie gelegt wird, woraufhin das erste Formbauteil über der ersten Folie angeordnet wird. Das Anordnen kann alternativ auch derart erfolgen, dass die beiden Folien zwischen die beiden Formbauteile geschoben werden. Das erste Formbauteil und/oder das zweite Formbauteil weist mikrostrukturierte auszufüllende Hohlformen auf. Diese Hohlformen dienen der Formung der mit dem jeweiligen Formbauteil in Kontakt tretenden Folie. Bei den Formbauteilen kann es sich beispielsweise um starre temperaturbeständige quaderförmige Körper aus Glas oder Silizium oder auch aus Kunststoff, Metall oder einem beliebigen anderen anorganischen oder organischen Material handeln, die jeweils eine im Wesentlichen ebene Außenfläche aufweisen, mit welcher sie dem jeweils anderen Formbauteil gegenüberstehen. Die beiden Formbauteile können auch unterschiedlichen Stoffen bestehen, da gegebenenfalls auftretende unterschiedliche thermische Ausdehnungen durch die beiden dazwischen befindlichen Folien ausglichen werden. Die im Wesentlichen ebene Außenfläche weist die mikrostrukturierten auszufüllenden Hohlformen auf und stellt die mit der jeweiligen Folie in Kontakt tretende Fläche des Formbauteils dar. In einem weiteren Schritt des erfindungsgemäßen Verfahrens werden das erste Formbauteil und das zweite Formbauteil zumindest in einem Bereich erwärmt, in welchem sie in Kontakt mit einer der Folien treten. Das Erwärmen des ersten Formbauteils und des zweiten Formbauteils erfolgt, um weiterhin die erste Folie und die zweite Folie zu erwärmen. Folglich werden sämtliche Berührungsflächen zwischen dem ersten Formbauteil, dem zweiten Formbauteil, der ersten Folie und der zweiten Folie erwärmt. Ein weiterer Schritt des erfindungsgemäßen Verfahrens sieht vor, dass ein Überdruck zwischen der ersten Folie und der zweiten Folie geschaffen wird, um die erste Folie und/oder die zweite Folie in die Hohlformen des ersten Formbauteils und/oder des zweiten Formbauteils zu drängen. Der Überdruck zeichnet sich dadurch aus, dass er höher als ein das erste Formbauteil und das zweite Formbauteil umgebender Druck ist. Der Überdruck kann beispielsweise dadurch erzeugt werden, dass ein Gas in den Hohlraum zwischen den beiden Folien mithilfe einer Überdruckpumpe gepresst wird. Alternativ oder ergänzend kann der Überdruck auch dadurch erzeugt werden, dass ein Unterdruck mithilfe einer Unterdruckpumpe in dem die beiden Folien und die beiden Formbauteile umgebenden Raum erzeugt wird. Der Raum zwischen der ersten Folie und der zweiten Folie ist vorzugsweise an den Rändern der ersten Folie und der zweiten Folie geeignet abzudichten, um den Überdruck in hohem Maße aufbauen zu können. Dies kann beispielsweise dadurch erfolgen, dass die erste Folie und die zweite Folie in ihren Randbereichen miteinander verschweißt sind oder zusammengepresst werden. In einem weiteren Schritt des erfindungsgemäßen Verfahrens werden das erste-Formbauteil und das zweite Formbauteil mit der dazwischen angeordneten ersten Folie und der dazwischen angeordneten zweiten Folie durch eine Presskraft zusammengepresst. Hierdurch werden sich berührende Bereiche der erwärmten Oberflächen zwischen der ersten Folie und dem ersten Formbauteil, zwischen der zweiten Folie und dem zweiten Formbauteil und zwischen der ersten Folie und der zweiten Folie miteinander verbunden. Bei diesem Verbinden kann es sich beispielsweise um ein Kleben oder ein Verschweißen handeln. Die Folien können z. B. mit einer Klebeschicht versehen sein. Nach einem Abkühlen des ersten Formbauteils, des zweiten Formbauteils, der ersten Folie und der zweiten Folie bilden diese ein mikrostrukturiertes Verbundbauteil aus. Das erste Formbauteil und das zweite Formbauteil sind über die erste Folie und über die zweite Folie fest miteinander verbunden. Zwischen der ersten Folie und der zweiten Folie, die nunmehr eine Einheit bilden, sind Mikrostrukturen, beispielsweise Mikrokanäle zur Durchführung von Flüssigkeiten ausgebildet.

Ein Vorteil des erfindungsgemäßen Verfahrens besteht darin, dass es zur Herstellung vielfältiger Mikrostrukturen verwendet werden kann. Das Verfahren erlaubt die Herstellung sehr kleiner Strukturen, beispielsweise von Kanälen mit einem Durchmesser von 100 µm oder weniger. Die für die Mikrostrukturen zur Verfügung stehenden Flächen auf den beiden Formbauteilen können bei dem erfindungsgemäßen Verfahren im Vergleich zum Stand der Technik größer gewählt werden, beispielsweise 10 cm x 20 cm. Der Überdruck gewährleistet, dass komplexe Mikrostrukturen auf der gesamten zur Verfügung stehenden Fläche durch eine thermische Formung der ersten Folie und/oder zweiten Folie entstehen.

Mithilfe des erfindungsgemäßen Verfahrens können beispielsweise mikrostrukturierte Hohlformen in Formbauteilen aus Glas laminiert werden. Bei der Herstellung von Mikrostrukturen in Glas durch einen Ätzvorgang entstehen stark hydrophile Oberflächen, die für mikrofluidische Prozesse wenig geeignet sind. Mit dem erfindungsgemäßen Verfahren werden einerseits Mikrostrukturen geschaffen und es werden anderseits gleichzeitig deren Oberflächeneigenschaften dadurch eingestellt, dass geeignete Folien ausgewählt werden. Die beiden Folien bestimmen die Oberflächeneigenschaften der Mikrostruktur.

Als Material für die erste Folie und für die zweite Folie wird bevorzugt ein Thermoplast verwendet. Es eignen sich beispielsweise Fluorkunststofffolien aus FEP, PTFE oder ETFE. Derartige Folien erlauben die Schaffung von Kanaloberflächen mit einer sehr geringen Oberflächenspannung, die zudem optisch transparent sein können.

Das Erwärmen der ersten Folie und der zweiten Folie erfolgt bevorzugt mindestens bis zu einer Glasübergangstemperatur des Thermoplasts. Hierdurch können die erste Folie und die zweite Folie thermoplastisch verformt werden, sodass sie die zu schaffende Form auch nach dem Abkühlen vollständig beibehalten. Die beiden Formbauteile müssen eine Temperaturbeständigkeit aufweisen, die mindestens die Glasübergangstemperatur des Thermoplasts umfasst. Diese Anforderung stellt die einzige aus dem erfindungsgemäßen Verfahren resultierende Anforderung an das Material der beiden Formbauteile dar.

Bei einer besonderen Ausführungsform des erfindungsgemäßen Verfahrens werden die erste Folie und die zweite Folie vor dem Anordnen zwischen dem ersten Formbauteil und dem zweiten Formbauteil vorstrukturiert. Beispielsweise können die erste Folie und/oder die zweite Folie mit Schwerionen bestrahlt und anschließend geätzt werden, um Poren in den Folien zu erzeugen.

Von besonderem Vorteil ist es, wenn beim Anordnen der ersten Folie über der zweiten Folie Funktionselemente und/oder eine dritte Folie zwischen der ersten Folie und der zweiten Folie angeordnet wird. Bei den Funktionselementen kann es sich beispielsweise um Schläuche als Fluidanschlüsse oder um Drähte als Elektroden handeln. Die Funktionselemente können so angeordnet werden, dass sie beim Zusammenpressen des ersten Formbauteils, der ersten Folie, der zweiten Folie und des zweiten Formbauteils fest mit der ersten Folie und/oder der zweiten Folie verbunden werden. Die Funktionselemente können auch derart angeordnet werden, dass sie nach dem Zusammenpressen innerhalb einer Mikrostruktur der ersten Folie und/oder der zweiten Folie beweglich bleiben. Hierdurch können beispielsweise passive Ventile realisiert werden. Bewegliche magnetische Bauteile können von außerhalb des Verbundbauteils manipuliert werden.

Das erste Formbauteil und/oder das zweite Formbauteil kann auf seiner mit der ersten Folie und/oder der zweiten Folie in Kontakt tretenden Oberfläche mit metallischen Strukturen versehen werden, um beispielsweise ein Elektro-Wetting zu ermöglichen. Bei einem Elektro-Wetting wird die Benetzungsfähigkeit der Oberfläche innerhalb einer Mikrostruktur durch das Anlegen einer Spannung verändert, um die fluidischen Prozesse zu beeinflussen.

Die dritte Folie kann beispielsweise durch eine perforierte Folie, durch ein Netz, durch ein Gitter oder durch ein Gewebe gebildet sein, um z. B. einen Gasdurchlass zu ermöglichen. Die dritte Folie kann in der Mikrostruktur des herzustellenden Verbundbauelementes beispielsweise ein Filter, ein elektrochemisches Diaphragma oder eine Matrix für Zellen bilden. Ein Metallgitter zwischen der ersten Folie und der zweiten Folie kann beispielsweise für chemisch katalytische Anwendungen oder elektrochemische Anwendungen eingesetzt werden. Es können auch weitere Folien zwischen dem ersten Formbauteil und der ersten Folie und/oder zwischen dem zweiten Formbauteil und der zweiten Folie angeordnet werden, z. B. in Form von Klebefolien.

Das erste Formbauteil und/oder das zweite Formbauteil werden bei einer besonderen Ausführungsform des erfindungsgemäßen Verfahrens nach dem Abkühlen mit einer oder mehreren Ausnehmungen versehen, um die erste Folie und/oder die zweite Folie im Bereich der einen oder der mehreren Ausnehmungen freizulegen. Der freigelegte Bereich kann bei dem Verbundbauteil beispielsweise dazu genutzt werden, um auf die Folie mechanisch einwirken zu können. So kann der freigelegte Bereich der Folie periodisch verformt werden, um eine Pumpenfunktion oder eine Ventilfunktion innerhalb der Mikrostruktur zu realisieren.

Bei einer besonderen Ausführungsform des erfindungsgemäßen Verfahrens werden das erste Formbauteil und/oder das zweite Formbauteil nach dem Abkühlen vollständig entfernt. Werden beide Formbauteile entfernt, beispielsweise durch einen Ätzvorgang, so besteht das herzustellende Formbauteil aus den beiden eine Einheit bildenden Folien sowie ggf. dazwischen befindlichen Funktionselementen.

Für das erfindungsgemäße Verfahren werden das erste Formbauteil und das zweite Formbauteil bevorzugt derart ausgeführt, dass die beiden mikrostrukturierten auszufüllenden Hohlformen spiegelsymmetrisch sind. Das erste Formbauteil und das zweite Formbauteil werden so zusammengepresst, dass die Hohlform des ersten Formbauteils und die Hohlform des zweiten Formbauteils spiegelsymmetrisch gegenüberstehen. Derartig geformte Formbauteile führen zu runden bzw. symmetrischen Mikrostrukturen, beispielsweise zu Kanälen mit einem kreisförmigen Querschnitt.

Die erfindungsgemäße Vorrichtung dient zur Herstellung mikrostrukturierter Verbundbauteile und umfasst zunächst ein erstes Joch zur Aufnahme eines ersten Formbauteils und ein zweites Joch zur Aufnahme eines dem ersten Formbauteil gegenüberstehenden zweiten Formbauteils. Folglich weisen das erste Joch und das zweite Joch einen Abstand zueinander auf, um das erste Formbauteil und das zweite Formbauteil dazwischen anordnen zu können. Die erfindungsgemäße Vorrichtung weist weiterhin eine Krafteinleitungsvorrichtung zur Einleitung einer Kraft auf, mit welcher das erste Joch in Richtung des zweiten Jochs gepresst wird. Hierdurch können die zwischen dem ersten Joch und dem zweiten Joch anzuordnenden Formbauteile aufeinander zu gepresst werden. Die Krafteinleitungsvorrichtung muss es zumindest erlauben, die notwendige Presskraft auf das erste Joch und/oder auf das zweite Joch einleiten zu können. Die Krafteinleitungsvorrichtung kann beispielsweise durch eine Presse gebildet sein, durch welche das erste Joch und das zweite Joch zusammengepresst werden können. Die Krafteinleitungsvorrichtung kann aber auch durch einen mechanischen Anschluss gebildet sein, mit welchem die Presskraft durch eine externe Maschine oder manuell auf das erste Joch und/oder das zweite Joch eingeleitet werden kann. Die erfindungsgemäße Vorrichtung besitzt weiterhin eine Überdruckpumpe zur Erzeugung eines Überdruckes in einem Hohlraum zwischen zwei zwischen dem ersten Formbauteil und dem zweiten Formbauteil anzuordnenden Folien. Die erfindungsgemäße Vorrichtung weist weiterhin eine Heizvorrichtung zum Erwärmen zumindest eines Übergangsbereichs zwischen dem ersten Formbauteil und dem zweiten Formbauteil auf. Mithilfe der Heizvorrichtung ist es möglich, das erste Formbauteil und das zweite Formbauteil sowie die zwischen dem ersten Formbauteil und dem zweiten Formbauteil anzuordnenden Folien derart zu erwärmen, dass sich die Folien durch die Formbauteile formen lassen und eine Verbindung zwischen dem ersten Formbauteil und dem zweiten Formbauteil bilden. Durch den Überdruck im Hohlraum zwischen den beiden Folien wird gewährleistet, dass die erwärmten Folien eine mikrostrukturierte Form annehmen, indem sie in die mikrostrukturierten auszufüllenden Hohlformen in den Formbauteilen gepresst werden.

Die erfindungsgemäße Vorrichtung dient insbesondere der Realisierung des erfindungsgemäßen Verfahrens und ermöglicht eine aufwandsarme Herstellung komplexer mikrostrukturierter Verbundbauteile. Die erfindungsgemäße Vorrichtung kann aber auch für abgewandelte Verfahren verwendet werden.

Bei einer bevorzugten Ausführungsform der erfindungsgemäßen Vorrichtung umfasst diese weiterhin ein Gehäuse, in welchem zumindest das erste Joch und das zweite Joch angeordnet sind. Folglich werden sich auch die zwischen dem ersten Joch und dem zweiten Joch anzuordnenden Formbauteile und Folien ebenfalls im Gehäuse befinden. Das Gehäuse ist mit einer Unterdruckpumpe zur Erzeugung eines Unterdruckes im Gehäuse verbunden. Mithilfe der Unterdruckpumpe ist es möglich, den durch die Überdruckpumpe im Hohlraum zwischen den Folien erzeugten Überdruck zu erhöhen. Die Unterdruckpumpe kann beispielsweise durch eine Vakuumpumpe gebildet sein, wodurch der durch die Überdruckpumpe erzeugbare Überdruck um den atmosphärischen Druck erhöht wird. Hierdurch kann in erhöhtem Maße gewährleistet werden, dass die Folien in die mikrostrukturierten Hohlformen der Formbauteile gedrängt werden.

Die erfindungsgemäße Vorrichtung umfasst weiterhin eine Folienaufnahme zur umfänglichen Aufnahme der beiden Folien. Bei der Folienaufnahme kann es sich beispielsweise um eine Einspannvorrichtung handeln, in welche die Folien jeweils an ihrem Rand eingespannt werden. Die Folienaufnahme kann ferner dazu dienen, den Hohlraum zwischen den beiden Folien abzudichten.

Die Folienaufnahme umfasst einen das erste Formbauteil und das zweite Formbauteil umfänglich umschließenden Distanzring, einen Druckring und einen Bodenring. Der Distanzring ist auf den Bodenring aufsetzbar, um eine der beiden Folien dazwischen einzuspannen. Der Druckring ist auf den Distanzring aufsetzbar, um die andere der beiden Folien dazwischen einzuspannen. Der Distanzring begrenzt somit den Hohlraum zwischen den beiden Folien. Er weist eine Öffnung zum Anschluss der Überdruckpumpe auf.

Der Druckring der Folienaufnahme ist bevorzugt über eine Feder durch die Krafteinleitungsvorrichtung mit einer Kraft in Richtung des auf dem Bodenring aufsitzenden Distanzringes beaufschlagbar. Folglich dient die über die Krafteinleitungsvorrichtung einleitbare Kraft zum einen zum Zusammenpressen des ersten Formbauteils und des zweiten Formbauteils und zum anderen zum Zusammenpressen des Distanzrings, des Druckrings und des Bodenrings der Folienaufnahme, wodurch die Abdichtung des Distanzrings gegenüber den beiden Folien gewährleistet wird.

Die erfindungsgemäße Vorrichtung umfasst bevorzugt weiterhin eine Dichtungsanordnung zum umfänglichen Abdichten der beiden Folien, um einen hohen Überdruck im Hohlraum zwischen den beiden Folien aufbauen zu können. Die Dichtungsanordnung kann integraler Bestandteil der Folienaufnahme sein, beispielsweise indem die Dichtungsanordnung durch Dichtungsringe auf den Stirnseiten des Distanzrings gebildet ist. Die Dichtungsringe dichten die Folie gegenüber dem Distanzring ab.

Das erfindungsgemäße mikrostrukturierte Verbundbauteil umfasst ein erstes Formbauteil und ein über dem ersten Formbauteil angeordnetes zweites Formbauteil. Zwischen dem ersten Formbauteil und dem zweiten Formbauteil sind eine erste Folie und eine zweite Folie angeordnet, die gemeinsam ein Verbindungselement zwischen dem ersten Formbauteil und dem zweiten Formbauteil bilden. Das erste Formbauteil ist mit dem zweiten Formbauteil über die erste Folie und über die zweite Folie fest miteinander verbunden. Die erste Folie und/oder die zweite Folie weist Mikrostrukturen auf, die in mikrostrukturierten Hohlformen im ersten Formbauteil und/oder im zweiten Formbauteil ausgeformt sind. Hierdurch bilden die erste Folie und/oder die zweite Folie eine Laminierung des ersten Formbauteils und/oder des zweiten Formbauteils, insbesondere der mikrostrukturierten Hohlformen aus. Die Mikrostrukturen bilden Hohlräume zwischen der ersten Folie und der zweiten Folie aus, durch welche beispielsweise Flüssigkeiten hindurchströmen können.

Das erfindungsgemäße mikrostrukturierte Verbundbauteil liegt im Ergebnis des erfindungsgemäßen Verfahrens vor. Es ist aufwandsarm mit komplexen Mikrostrukturen und zusätzlichen Funktionselementen innerhalb der Mikrostrukturen herstellbar. Das erfindungsgemäße mikrostrukturierte Verbundbauteil kann aber auch auf andere Weise hergestellt werden.

Die erste Folie und die zweite Folie des erfindungsgemäßen mikrostrukturierten Verbundbauteils bestehen bevorzugt aus einem Thermoplast, beispielsweise einem Fluorkunststoff, welcher eine geringe Oberflächenspannung aufweist.

Bei einer bevorzugten Ausführungsform des erfindungsgemäßen mikrostrukturierten Verbundbauteils sind zwischen der ersten Folie und der zweiten Folie eine dritte Folie und/oder Funktionselemente angeordnet. Die dritte Folie kann beispielsweise eine perforierte Folie, ein Netz, ein Gitter oder ein Gewebe sein. Bei der dritten Folie kann es sich auch um eine farbige, schwarze oder spiegelnde Folie handeln, um das erfindungsgemäße mikrostrukturierte Verbundbauteil für spektroskopische oder optische Anwendungen nutzen zu können. Die Funktionselemente können beispielsweise der Realisierung einer Pumpe oder eines Ventils innerhalb der Mikrostruktur dienen. Bei den Funktionselementen kann es sich aber auch um Schläuche oder Elektroden handeln.

Bei einer besonderen Ausführungsform des erfindungsgemäßen mikrostrukturierten Verbundbauteils weisen das erste Formbauteil und/oder das zweite Formbauteil eine oder mehrere Ausnehmungen auf, durch welche die erste Folie und/oder die zweite Folie im Bereich der einen oder der mehreren Ausnehmungen freigelegt ist. Die Ausnehmungen erlauben eine Einwirkung auf den freigelegten Bereich der jeweiligen Folie, um beispielsweise eine Pumpenfunktion zu realisieren.

Bei einer weiteren Ausführungsform des erfindungsgemäßen mikrostrukturierten Verbundbauteils sind die erste Folie und/oder die zweite Folie nicht ausschließlich zwischen dem ersten Formbauteil und dem zweiten Formbauteil angeordnet, sondern bedecken auch Außenflächen des ersten Formbauteils und/oder des zweiten Formbauteils, wodurch diese laminiert sind. Diese Laminierung schützt das erste Formbauteil und/oder das zweite Formbauteil und somit das gesamte mikrostrukturierte Verbundbauteil vor äußeren Einflüssen.

Weitere Vorteile, Einzelheiten und Weiterbildungen der Erfindung ergeben sich aus der nachfolgenden Beschreibung mehrere Ausführungsformen, unter Bezugnahme auf die Zeichnung. Es zeigen:
- Fig. 1:: fünf Schritte einer bevorzugten Ausführungsform des erfindungsgemäßen Verfahrens zur Herstellung eines mikrostrukturierten Verbundbauteils;
- Fig. 2:: ein Schritt einer besonderen Ausführungsform des erfindungsgemäßen Verfahrens;
- Fig. 3:: zwei Schritte einer weiteren Ausführungsform des erfindungsgemäßen Verfahrens, bei welchen ein Schlauch eingebracht wird;
- Fig. 4:: ein Schritt einer Ausführungsform des erfindungsgemäßen Verfahrens, bei welchem ein Formbauteil mit einer Ausnehmung verwendet wird;
- Fig. 5:: drei Schritte einer weiteren Ausführungsform des erfindungsgemäßen Verfahrens, bei denen eine Ausnehmung in einem Formbauteil geschaffen wird;
- Fig. 6:: zwei Schritte einer weiteren besonderen Ausführungsform des erfindungsgemäßen Verfahrens, bei denen Formbauteile vollständig entfernt werden;
- Fig. 7:: zwei Schritte einer Ausführungsform des erfindungsgemäßen Verfahrens, bei denen ein Funktionselement eingebracht wird;
- Fig. 8:: vier Schritte einer weiteren besonderen Ausführungsform des erfindungsgemäßen Verfahrens;
- Fig. 9:: zwei Schritte einer Ausführungsform des erfindungsgemäßen Verfahrens, bei denen eine perforierte Folie eingebracht wird; und
- Fig. 10:: eine bevorzugte Ausführungsform der erfindungsgemäßen Vorrichtung zur Herstellung mikrostrukturierter Verbundbauteile.

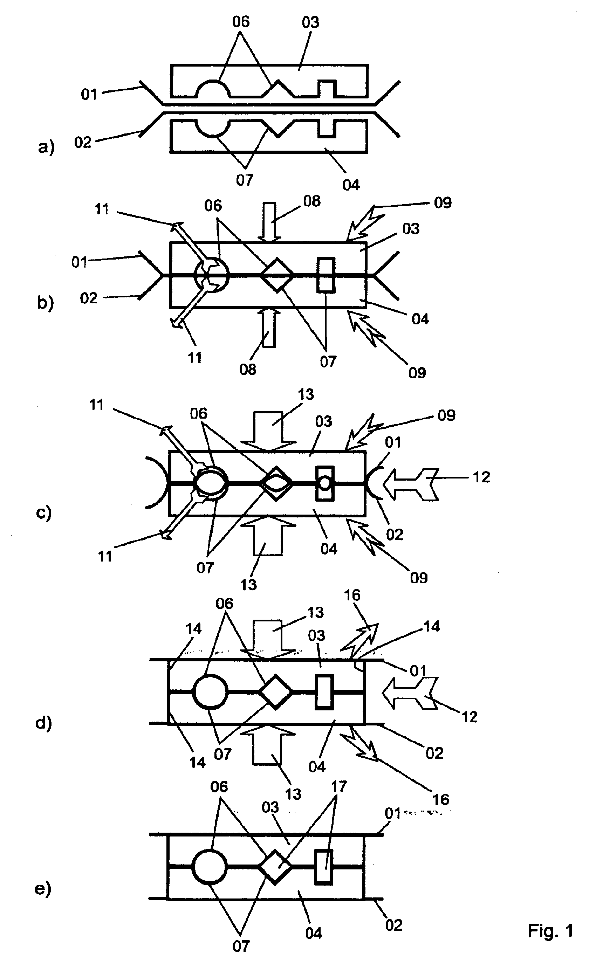

Fig. 1 zeigt fünf Schritte einer bevorzugten Ausführungsform des erfindungsgemäßen Verfahrens zur Herstellung eines mikrostrukturierten Verbundbauteils. Die Abb. a) bis e) der Fig. 1 zeigen jeweils einen der fünf Schritte. Abb. a) zeigt einen ersten Schritt, bei welchem eine erste Polymerfolie 01 und eine zweite Polymerfolie 02 zwischen einem ersten Formbauteil 03 und einem zweiten Formbauteil 04 angeordnet werden. Die erste Folie 01 und die zweite Folie 02 sind gleich ausgeführt und werden überdeckend zueinander angeordnet. Das erste Formbauteil 03 weist eine erste mikrostrukturierte Hohlform 06 auf. Das zweite Formbauteil 04 weist eine zweite mikrostrukturierte Hohlform 07 auf. Die erste mikrostrukturierte Hohlform 06 und die zweite mikrostrukturierte Hohlform 07 können mit einem beliebigen Verfahren, wie beispielsweise durch Ätzen, Strahlen, Fräsen, Prägen in das erste Formbauteil 03 und das zweite Formbauteil 04 eingebracht sein. Folglich können auch beliebige Geometrien und auch Hinterschnitte erzeugt sein. Die erste mikrostrukturierte Hohlform 06 und die zweite mikrostrukturierte Hohlform 07 sind spiegelsymmetrisch zueinander ausgeführt. Die erste mikrostrukturierte Hohlform 06 und die zweite mikrostrukturierte Hohlform 07 dienen der Formung der erste Polymerfolie 01 und der zweiten Polymerfolie 02.

Abb. b) der Fig. 1 zeigt einen zweiten Schritt des erfindungsgemäßen Verfahrens. Bei diesem zweiten Schritt werden das erste Formbauteil 03 und das zweite Formbauteil 04 mit einer Kontaktkraft 08 zusammengepresst, wodurch die erste Polymerfolie 01 und die zweite Polymerfolie 02 zwischen dem ersten Formbauteil 03 und dem zweiten Formbauteil 04 zum Anliegen kommen und dort eingeklemmt werden. Die Kontaktkraft 08 wird durch eine Regelung konstant gehalten. Weiterhin wird auf das erste Formbauteil 03 und das zweite Formbauteil 04 eine Wärme 09 übertragen, wodurch das erste Formbauteil 03 und das zweite Formbauteil 04 erwärmt werden. Zudem wird in einem Raum, in welchem sich das erste Formbauteil 03 und das zweite Formbauteil 04 befinden, ein Unterdruck 11 erzeugt, der ein technisches Vakuum darstellt. Hierdurch erfolgt eine Evakuierung des Bereiches zwischen der ersten Polymerfolie 01 sowie des Bereiches zwischen der zweiten Polymerfolie 02 und dem zweiten Formbauteil 04.

Abb. c) der Fig. 1 zeigt einen dritten Schritt des erfindungsgemäßen Verfahrens. Die auf das erste Formbauteil 03 und das zweite Formbauteil 04 übertragene Wärme 09 führte dazu, dass sich ebenfalls die erste Polymerfolie 01 und die zweite Polymerfolie 02 erwärmt haben. Die erste Polymerfolie 01 und die zweite Polymerfolie 02 haben eine Temperatur erreicht, die geringfügig größer als die Glasübergangstemperatur des Polymers der ersten Polymerfolie 01 und der zweiten Polymerfolie 02 ist. Folglich können die erste Polymerfolie 01 und die zweite Polymerfolie 02 thermoplastisch verformt werden. Auf einen Raum zwischen der ersten Polymerfolie 01 und der zweiten Polymerfolie 02 wirkt ein Überdruck bereits deswegen, weil dieser Raum gegenüber dem das erste Formbauteil 03 und das zweite Formbauteil 04 umgebenden Raum, auf welchen das Vakuum 11 wirkt, abgedichtet ist. Der Überdruck in dem Raum zwischen der ersten Polymerfolie 01 und der zweiten Polymerfolie 02 wird zusätzlich dadurch erhöht, dass ein Formgas 12 mit einem großen Überdruck in diesen Raum gepumpt wird. Der große Überdruck in dem Raum zwischen der ersten Polymerfolie 01 und der zweiten Polymerfolie 02 sowie die thermoplastische Verformbar-keit der ersten Polymerfolie 01 und der zweiten Polymerfolie 02 führen dazu, dass sich die erste Polymerfolie 01 und die zweite Polymerfolie 02 der Form der ersten mikrostrukturierten Hohlform 06 und der zweiten mikrostrukturierten Hohlform 07 anpassen. Die erste Polymerfolie 01 und die zweite Polymerfolie 02 formen die erste mikrostrukturierte Hohlform 06 und die zweite mikrostrukturierte Hohlform 07 aus. In diesem dritten Schritt des erfindungsgemäßen Verfahrens muss die Kraft zum Zusammenpressen des ersten Formbauteils 03 und des zweiten Formbauteils 04 erhöht werden, um den Überduck zwischen der ersten Folie 01 und der zweiten Folie 02 entgegenzuwirken. Weiterhin wird die Kraft zum Zusammenpressen des ersten Formbauteils 03 und des zweiten Formbauteils 04 bis zu einer Anpresskraft 13 erhöht. Hierdurch werden die erste Polymerfolie 01 und die zweite Polymerfolie 02 derart zwischen das erste Formbauteil 03 und das zweite Formbauteil 04 gepresst, dass sie aufgrund ihres thermoplastisch verformbaren Zustands eine Verbindung des ersten Formbauteils 03 und des zweiten Formbauteils 04 ausbilden.

Abb. d) der Fig. 1 zeigt einen vierten Schritt des erfindungsgemäßen Verfahrens. Der vierte Schritt beginnt, wenn die erste Polymerfolie 01 und die zweite Polymerfolie 02 die erste mikrostrukturierte Hohlform 06 und die zweite mikrostrukturierte Hohlform 07 vollständig ausgefüllt haben. Der Überdruck zwischen der ersten Polymerfolie 01 und der zweiten Polymerfolie 02 führt weiterhin dazu, dass die erste Polymerfolie 01 und die zweite Polymerfolie 02 auf seitliche Außenflächen 14 des ersten Formbauteils 03 und des zweiten Formbauteils 04 gepresst wurden. Die erste Polymerfolie 01 und die zweite Polymerfolie 02 bilden eine Laminierung des ersten Formbauteils 03 und des zweiten Formbauteils 04 im Bereich der ersten mikrostrukturierten Hohlform 06 und der zweiten mikrostrukturierten Hohlform 07 sowie der Außenflächen 14 aus. Während die Anpresskraft 13 weiterhin aufrechterhalten wird, werden das erste Formbauteil 03 und das zweite Formbauteil 04 im vierten Schritt des erfindungsgemäßen Verfahrens nicht mehr erwärmt, sondern durch die Umgebungstemperatur abgekühlt, sodass eine Wärme 16 von dem ersten Formbauteil 03 und dem zweiten Formbauteil 04 abgegeben wird. Dies führt zunächst dazu, dass die Glasübergangstemperatur der ersten Polymerfolie 01 und der zweiten Polymerfolie 02 unterschritten wird und eine plastische Verformung der ersten Polymerfolie 01 und der zweiten Polymerfolie 02 nicht mehr möglich ist. Folglich bilden die erste Polymerfolie 01 und die zweite Polymerfolie 02 eine dauerhafte Laminierung und Verbindung des ersten Formbauteils 03 und des zweiten Formbauteils 04 aus.

Abb. e) der Fig. 1 zeigt einen fünften Schritt des erfindungsgemäßen Verfahrens, bei welchem das zu erzielende Verbundbauteil vorliegt. Das erste Formbauteil 03 und das zweite Formbauteil 04 sowie die erste Polymerfolie und die zweite Polymerfolie 02 sind vollständig abgekühlt und bilden ein einziges, fest verbundenes Verbundbauteil aus, in welchem zwischen der mit der ersten Polymerfolie 01 beschichteten ersten mikrostrukturierten Hohlform 06 und der mit der zweiten Polymerfolie 02 beschichteten zweiten mikrostrukturierten Hohlform 07 mikrostrukturierte Hohlräume 17 ausgebildet sind.

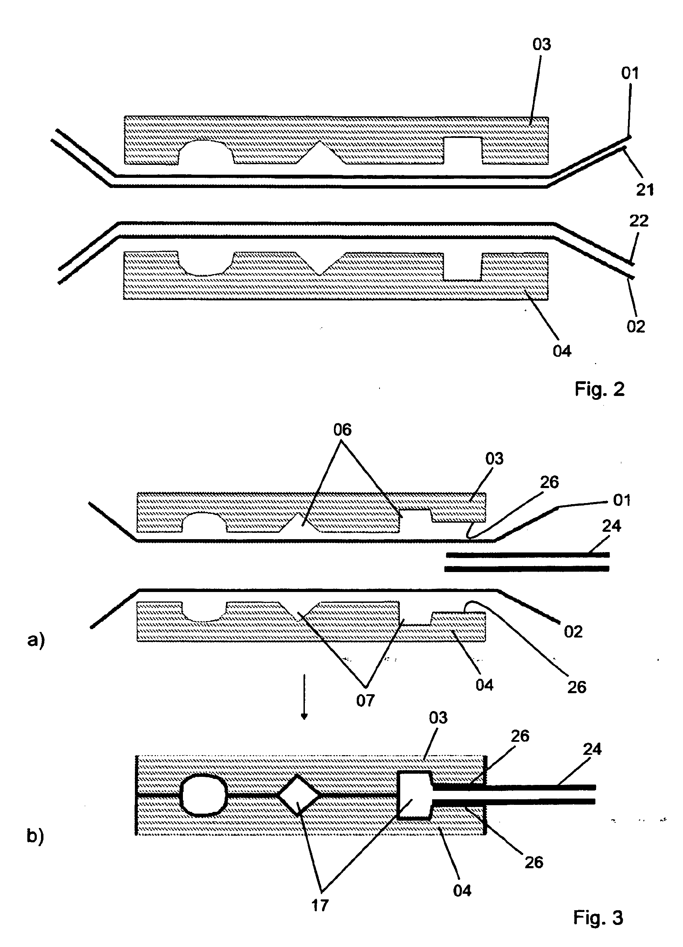

Fig. 2 zeigt einen ersten Schritt einer besonderen Ausführungsform des erfindungsgemäßen Verfahrens. Bei dieser Ausführungsform des erfindungsgemäßen Verfahrens werden zwischen die erste Polymerfolie 01 und die zweite Polymerfolie 02 eine dritte Folie 21 und eine vierte Folie 22 angeordnet. Die dritte Folie 21 und die vierte Folie 22 weisen besondere Eigenschaften auf, um bestimmte Funktionen zu erzielen. Beispielsweise können die dritte Folie 21 und die vierte Folie 22 farbig, schwarz oder spiegelnd ausgeführt sein, um das herzustellende mikrostrukturierte Verbundbauteil für spektroskopische oder optische Anwendungen auszuführen. Auch können die erste Polymerfolie 01, die zweite Polymerfolie 02, die dritte Folie 21 und/oder die vierte Folie 22 derart ausgeführt sein, dass sie als Haftvermittler fungieren. Weiterhin können das erste Formbauteil 03 und/oder das zweite Formbauteil 04 vorlaminiert sein, bevor es dem erfindungsgemäßen Verfahren unterzogen wird. Die Vorlaminierung kann auch bereits die erste Polymerfolie 01 oder die zweite Polymerfolie 02 bilden.

Fig. 3 zeigt zwei Schritte einer besonderen Ausführungsform des erfindungsgemäßen Verfahrens. Abb. a) der Fig. 3 zeigt einen ersten Schritt dieser Ausführungsform, bei welchem zwischen die erste Polymerfolie 01 und die zweite Polymerfolie 02 weiterhin ein Schlauch 24 angeordnet wird. Der Schlauch 24 wird insbesondere in einem Randbereich des ersten Formbauteils 03 und des zweiten Formbauteils 04 angeordnet, wobei ein Teil des Schlauchs 24 sich außerhalb des Zwischenraums zwischen dem ersten Formbauteil 03 und dem zweiten Formbauteil 04 befindet. Das erste Formbauteil 03 und das zweite Formbauteil 04 weisen jeweils eine Schlauchaufnahme 26 auf, welche den Schlauch 24 passgenau aufnehmen können.

Abb. b) der Fig. 3 zeigt einen Schritt dieser Ausführungsform des erfindungsgemäßen Verfahrens, bei welchem das mikrostrukturierte Verbundbauteil bereits ausgebildet ist. Der Schlauch 24 sitzt fest zwischen den Schlauchaufnahmen 26 des ersten Formbauteils 03 und des zweiten Formbauteils 04. Der Schlauch 24 führt von außerhalb des Verbundbauteils bis in eine der mikrostrukturierten Hohlräume 17 des Verbundbauteils, wodurch beispielsweise Flüssigkeiten in die mikrostrukturierten Hohlräume 17 des Verbundbauteils eingeleitet werden können. In gleicher Weise wie der Schlauch 24 können auch andere Funktionselemente, wie beispielsweise Drähte oder Aktuatoren in das mikrostrukturierte Verbundbauteil eingebracht werden.

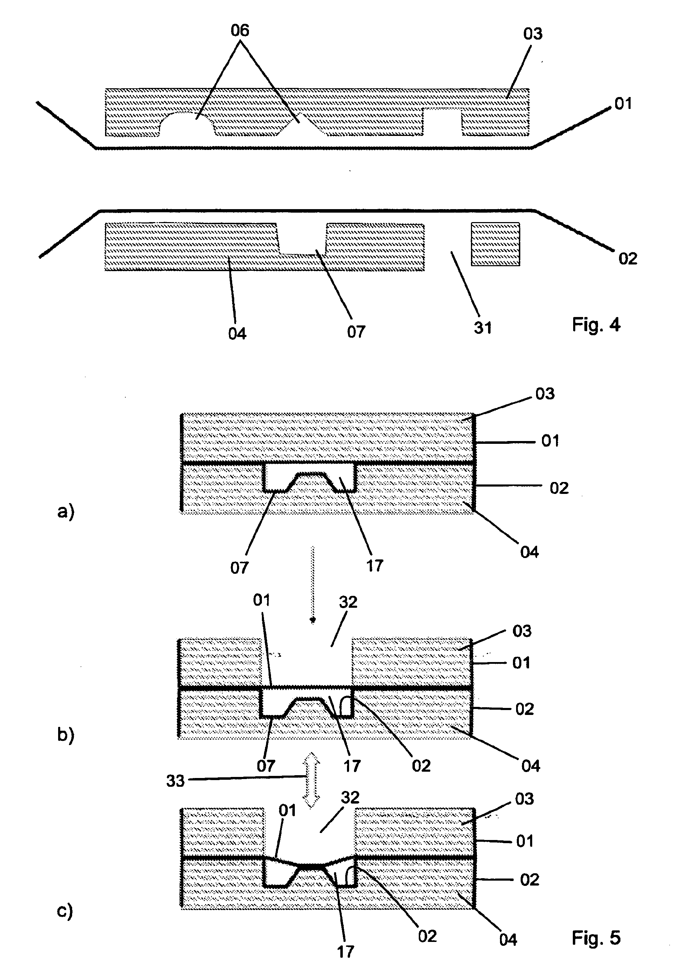

Fig. 4 zeigt einen Schritt einer weiteren Ausführungsform des erfindungsgemäßen Verfahrens. Bei dieser Ausführungsform ist das zweite Formbauteil 04 mit einer Ausnehmung 31 versehen. Die Ausnehmung 31 führt dazu, dass bei dem herzustellenden Verbundbauteil ein Bereich der zweiten Polymerfolie 02 nicht durch das zweite Formbauteil 04 bedeckt ist sondern frei zugänglich ist. Die Ausnehmung 31 kann während verschiedener Schritte des erfindungsgemäßen Verfahrens geschaffen werden. In der Fig. 4 ist ferner beispielhaft gezeigt, dass die erste mikrostrukturierte Hohlform 06 und die zweite mikrostrukturierte Hohlform 07 nicht spiegelsymmetrisch ausgeführt sein müssen. Auch kann das erste Formbauteil 03 oder das zweite Formbauteil 04 vollständig ohne eine mikrostrukturierte Hohlform ausgeführt sein.

Fig. 5 zeigt drei Schritte einer Ausführungsform des erfindungsgemäßen Verfahrens, bei welcher wie bei der in Fig. 4 dargestellten Ausführungsform die Formbauteile 03, 04 nicht vollständig geschlossen sind. Abb. a) der Fig. 5 zeigt einen Schritt, bei welchem das mikrostrukturierte Verbundbauteil insoweit vorliegt, als dass es sämtliche der in Fig. 1 gezeigten Schritte durchlaufen hat. Bei der gezeigten Ausführungsform weist das erste Formbauteil 03 keine mikrostrukturierte Hohlform auf.

Abb. b) der Fig. 5 zeigt einen weiteren Schritt, bei welchem eine Ausnehmung 32 im ersten Formbauteil 03 über der mikrostrukturierten Hohlform 07 des zweiten Formbauteils 04 geschaffen wird. Der mikrostrukturierte Hohlraum 17 innerhalb der mikrostrukturierten Hohlform 07 des zweiten Formbauteils 04 wird im Bereich der Ausnehmung 32 nur durch die erste Polymerfolie 01 nach außen begrenzt.

Abb. c) der Fig. 5 zeigt einen Schritt des erfindungsgemäßen Verfahrens, wie er insbesondere auch in einer späteren Verwendung des mikrostrukturierten Verbundbauteils auftritt. Auf die erste Polymerfolie 01 wirkt im Bereich der Ausnehmung 32 eine Kraft oder ein Druck 33 ein, sodass dieser Bereich der ersten Polymerfolie 01 elastisch verformt wird. Hierdurch kann beispielsweise eine Pumpe im mikrostrukturierten Hohlraum 17 realisiert werden.

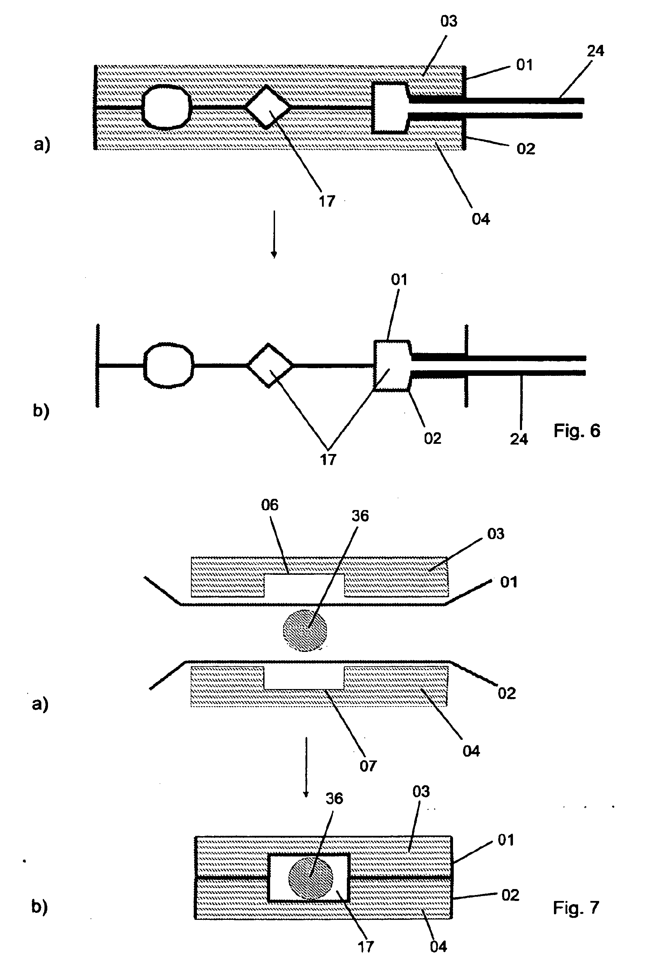

Fig. 6 zeigt zwei Schritte einer weiteren besonderen Ausführungsform des erfindungsgemäßen Verfahrens. Abb. a) der Fig. 6 zeigt einen Schritt, bei welchem ein Verbundbauteil vorliegt, nachdem es die in Fig. 3 gezeigten Schritte durchlaufen hat.

Abb. b) der Fig. 6 zeigt einen weiteren Schritt, bei welchem das erste Formbauteil 03 und das zweite Formbauteil 04 durch einen Ätzvorgang vollständig entfernt wurden. Das mikrostrukturierte Verbundbauteil umfasst nunmehr die erste Polymerfolie 01, die zweite Polymerfolie 02 und den Schlauch 24. Diese Ausführungsform des erfindungsgemäßen Verfahrens führt zu mikrostrukturierten Verbundbauteilen, die wesentlich leichter und kleiner sind. Diese Ausführungsform ist beispielsweise für Anwendungen geeignet, bei denen die mechanische Stützung durch das erste Formbauteil 03 und das zweite Formbauteil 04 nicht benötigt wird. Das erfindungsgemäße Verfahren kann auch derart ausgeführt werden, dass nur eines der beiden Formbauteile 03, 04 vollständig entfernt wird. Auch können das erste Formbauteil 03 und/oder das zweite Formbauteil 04 lediglich teilweise entfernt werden.

Fig. 7 zeigt zwei Schritte einer weiteren bevorzugten Ausführungsform des erfindungsgemäßen Verfahrens. Abb. a) der Fig. 7 zeigt einen Schritt des erfindungsgemäßen Verfahrens, bei welchem eine Kugel 36 als Funktionselement zwischen die erste Polymerfolie 01 und die zweite Polymerfolie 02 im Bereich zwischen der ersten mikrostrukturierten Hohlform 06 und der zweiten mikrostrukturierten Hohlform 07 angeordnet wird.

Abb. b) der Fig. 7 zeigt einen Schritt des erfindungsgemäßen Verfahrens, nachdem die in Fig. 1 gezeigten Schritte durchlaufen wurden. Die Kugel 36 befindet sich nunmehr beweglich innerhalb des mikrostrukturierten Hohlraums 17, wodurch beispielsweise die Funktion eines Ventils im mikrostrukturierten Hohlraum 17 realisiert werden kann. Die Kugel 36 kann beispielsweise derart ausgeführt sein, dass sie von außerhalb des Verbundbauteils beeinflussbar ist, beispielsweise durch ein magnetisches Feld.

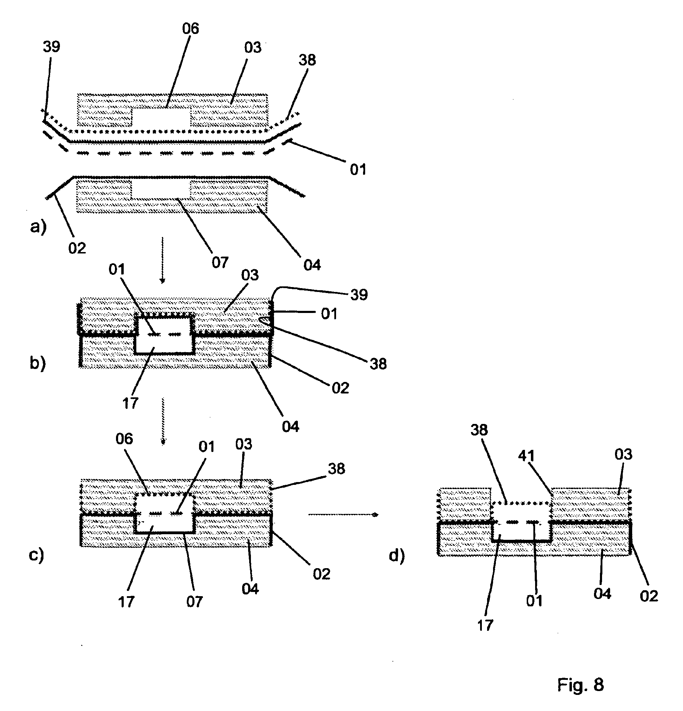

Fig. 8 zeigt vier Schritte einer weiteren besonderen Ausführungsform des erfindungsgemäßen Verfahrens. Abb. a) zeigt einen Schritt, bei welchem wie bei der in Fig. 2 gezeigten Ausführungsform weitere Folien zwischen das erste Formbauteil 03 und das zweite Formbauteil 04 eingebracht werden. Zwischen das erste Formbauteil 03 und die erste Polymerfolie 01 werden eine perforierte Folie 38 und eine lösliche Folie 39 angeordnet. Die erste Polymerfolie 01 ist bei dieser Ausführungsform durchlässig ausgeführt.

Abb. b) der Fig. 8 zeigt einen Schritt, nachdem die in Fig. 1 gezeigten Schritte des erfindungsgemäßen Verfahrens durchlaufen wurden. Im Verbundbauteil ist der mikrostrukturierte Hohlraum 17 ausgebildet. Der Überdruck zwischen der von der löslichen Folie 39 bedeckten ersten Polymerfolie 01 und der zweiten Polymerfolie 02 wurde derart aufgebaut, dass die perforierte Folie 38 und die lösliche Folie 39 in die erste Mikrostruktur 06 gedrängt wurden. Die erste Polymerfolie 01 wurde aufgrund ihrer Durchlässigkeit nicht in die erste mikrostrukturierte Hohlform 06 gedrängt, sodass sie im Bereich des mikrostrukturierten Hohlraums 17 weiterhin eben ausgeführt ist.

Abb. c) der Fig. 8 zeigt einen weiteren Schritt der besonderen Ausführungsform des erfindungsgemäßen Verfahrens, bei welchem die lösliche Folie 39 durch ein Lösungsmittel aufgelöst wurde. Die lösliche Folie 39 ist insbesondere im mikrostrukturierten Hohlraum 17 nicht mehr vorhanden. Die lösliche Folie 39 diente insbesondere dazu, dass die perforierte Folie 38 in die erste mikrostrukturierte Hohlform 06 gedrängt wurde.

Abb. d) der Fig. 8 zeigt einen Schritt der besonderen Ausführungsform des erfindungsgemäßen Verfahrens, bei welchem eine Ausnehmung 41 im ersten Formbauteil 03 im Bereich des mikrostrukturierten Hohlraums 17 geschaffen wurde. Die Ausnehmung 41 des Verbundbauteils kann beispielsweise für die Züchtung von biologischen Zellen verwendet werden. Die Zellen können eine im mikrostrukturierten Hohlraum 17 bevorratete Flüssigkeit durch die perforierte Folie 38 aufnehmen. Die Zellen haften aufgrund von Adhäsion an der perforierten Folie 38.

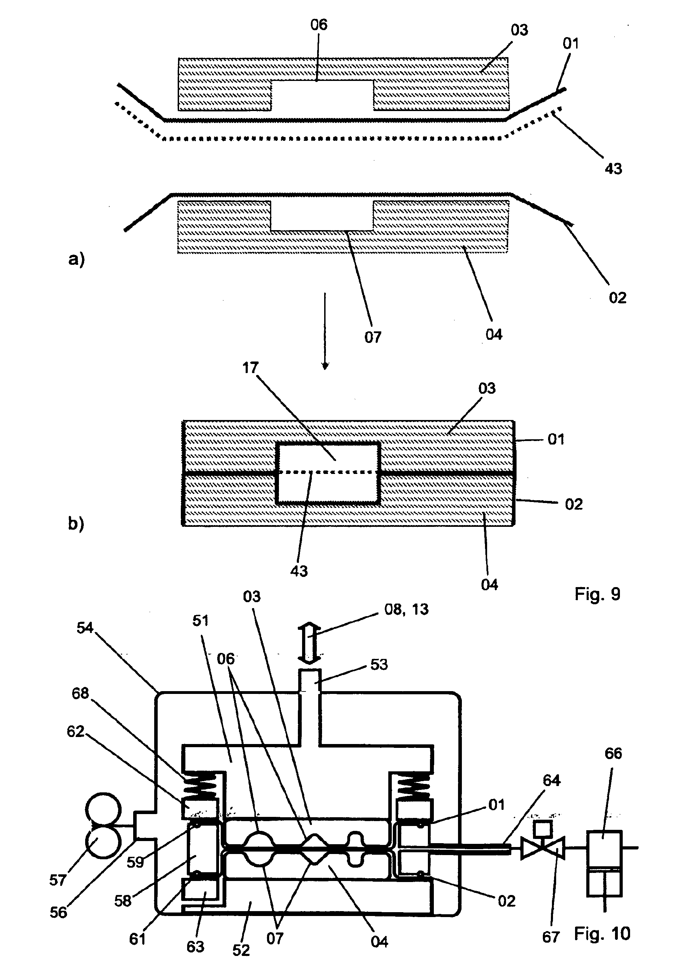

Fig. 9 zeigt zwei Schritte einer weiteren bevorzugten Ausführungsform des erfindungsgemäßen Verfahrens. Abb. a) der Fig. 9 zeigt einen Schritt, bei welchem zwischen die erste Polymerfolie 01 und die zweite Polymerfolie 02 eine durchlässige Struktur in Form einer perforierten Folie 43 eingebracht ist. Anstatt einer perforierten Folie können auch Netze, Gitter, Gewebe oder ähnliche Strukturen eingebracht werden.

Abb. b) der Fig. 9 zeigt einen Schritt der bevorzugten Ausführungsform des erfindungsgemäßen Verfahrens, nachdem die in Fig. 1 gezeigten Schritte durchlaufen wurden. Die perforierte Folie 43 teilt den mikrostrukturierten Hohlraum 17 und kann dort beispielsweise als Filter dienen.

Fig. 10 zeigt eine bevorzugte Ausführungsform einer erfindungsgemäßen Vorrichtung zur Herstellung mikrostrukturierter Verbundbauteile. Mit der erfindungsgemäßen Vorrichtung kann z. B. das in Fig. 1 gezeigte erfindungsgemäße Verfahren durchgeführt werden. Die Vorrichtung umfasst zunächst ein Oberjoch 51 und ein Unterjoch 52, zwischen welche das erste Formbauteil 03 und das zweite Formbauteil 04 eingespannt werden. Das Oberjoch 51 und das Unterjoch 52 erlauben eine diskrete Positionierung des ersten Formbauteils 03 und des zweiten Formbauteils 04, sodass sie exakt zueinander ausgerichtet werden. Das Oberjoch 51 weist eine Anschlussstange 53 auf, über welche die Kontaktkraft 08 und die Anpresskraft 13 zum kraftgeregelten Zusammenpressen des ersten Formbauteils 03 und des zweiten Formbauteils 04 auf das Oberjoch 51 übertragen werden kann. Die Kontaktkraft 08 und die Anpresskraft 13 wirken über ein Gehäuse 54 gegen das Unterjoch 52. Im Gehäuse 54 befinden sich zunächst das Oberjoch 51 und das Unterjoch 52. Folglich werden auch das erste Formbauteil 03 und das zweite Formbauteil 04 sowie die erste Polymerfolie 01 und die zweite Polymerfolie 02 zur Durchführung des erfindungsgemäßen Verfahrens in dem Gehäuse 54 angeordnet. Das Gehäuse 54 weist einen Anschlussstutzen 56 zum Anschluss einer Vakuumpumpe 57 auf. Mithilfe der Vakuumpumpe 57 ist es möglich, ein technisches Vakuum in dem das erste Formbauteil 03 und das zweite Formbauteil 04 umgebenen Raum zu schaffen. Das erste Formbauteil 03 und das zweite

Formbauteil 04 werden umfänglich von einem hohlzylinderförmigen Distanzring 58 umschlossen. Der Distanzring 58 begrenzt einen Hohlraum zwischen der ersten Polymerfolie 01 und der zweiten Polymerfolie 02. Mithilfe eines ersten Dichtungsrings 59 und eines zweiten Dichtungsrings 61 wird der Hohlraum zwischen der ersten Polymerfolie 01 und der zweiten Polymerfolie 02 gegenüber dem Distanzring 58 abgedichtet. Die erste Polymerfolie 01 wird mithilfe eines Druckrings 62 gegen den ersten Dichtungsring 59 auf dem Distanzring 58 gepresst. Der Druckring 62 weist ebenfalls die Form eines Hohlzylinders auf. Im Unterjoch 52 ist ein Bodenring 63 ausgebildet, wodurch die zweite Polymerfolie 02 gegen den zweiten Dichtungsring 61 am Distanzring 58 gepresst ist. Folglich werden die erste Polymerfolie 01 und die zweite Polymerfolie 02 durch den Druckring 62, den Distanzring 58 und den Bodenring 63 aufgenommen und eingespannt und insbesondere durch den ersten Dichtungsring 59 und den zweiten Dichtungsring 61 gegeneinander abgedichtet, sodass der Hohlraum zwischen der ersten Polymerfolie 01 und der zweiten Polymerfolie 02 gegenüber dem übrigen Hohlraum im Gehäuse 54 abgetrennt ist. Der Distanzring 58 weist einen Überdruckanschluss 64 zum Anschluss an eine Druckquelle 66 über ein Ventil 67 auf. Mithilfe der Druckquelle 66 kann über das Ventil 67 und den Überdruckanschluss 64 ein Formgas in den Hohlraum zwischen der ersten Polymerfolie 01 und der zweiten Polymerfolie 02 eingeleitet werden. Der Überdruckanschluss 64 ist gegenüber dem Gehäuse 54 abgedichtet.

Zwischen dem Druckring 62 und dem Oberjoch 51 sind Federelemente 68 angeordnet, sodass die Kontaktkraft 08 und die Anpresskraft 13 über die Federelemente 68 auf den Druckring 62 wirken, wodurch dieser gegen den Distanzring 58 und gegen das Unterjoch 52 gepresst wird. Daher dienen die Kontaktkraft 08 und die Anpresskraft 13 auch dazu, den Hohlraum zwischen der ersten Polymerfolie 01 und der zweiten Polymerfolie 02 gegenüber dem Distanzring 58 abzudichten.

Die erfindungsgemäße Vorrichtung umfasst weiterhin eine Heizvorrichtung (nicht gezeigt) zum Erwärmen des ersten Formbauteil 03 und des zweiten Formbauteils 04.

Das Oberjoch 51 und das Unterjoch 52 sind derart dimensioniert, dass beispielsweise Formbauteile 03, 04 mit einem Querschnitt von 10 cm x 20 cm aufgenommen werden können.

**Bezugszeichenliste**

| | |
|---|---|
| 01 - | erste Polymerfolie |
| 02 - | zweite Polymerfolie |
| 03 - | erstes Formbauteil |
| 04 - | zweites Formbauteil |
| 05 - | - |
| 06 - | erste mikrostrukturierte Hohlform |
| 07 - | zweite mikrostrukturierte Hohlform |
| 08 - | Kontaktkraft |
| 09 - | zugeführte Wärme |
| 10 - | - |
| 11 - | Vakuum |
| 12 - | Formgas |
| 13 - | Anpresskraft |
| 14 - | Außenflächen |
| 15 - | - |
| 16 - | Wärme |
| 17 - | mikrostrukturierte Hohlräume |
| 18 - | - |
| 19 - | - |
| 20 - | - |
| 21 - | dritte Folie |
| 22 - | vierte Folie |
| 23 - | - |
| 24 - | Schlauch |
| 25 - | - |
| 26 - | Schlauchaufnahme |
| 31 - | Ausnehmung |
| 32 - | Ausnehmung |
| 33 - | Druck/Kraft |
| 34 - | - |
| 35 - | - |
| 36 - | Kugel |
| 37 - | - |
| 38 - | perforierte Folie |
| 39 - | lösliche Folie |
| 40 - | - |
| 41 - | Ausnehmung |
| 42 - | - |
| 43 - | perforierte Folie |
| | |
| | |
| 51 - | Oberjoch |
| 52 - | Unterjoch |
| 53 - | Anschlussstange |
| 54 - | Gehäuse |
| 55 - | - |
| 56 - | Anschlussstutzen |
| 57 - | Vakuumpumpe |
| 58 - | Distanzring |
| 59 - | erster Dichtungsring |
| 60 - | - |
| 61 - | zweiter Dichtungsring |
| 62 - | Druckring |
| 63 - | Bodenring |
| 64 - | Überdruckanschluss |
| 65 - | - |
| 66 - | Druckquelle |
| 67 - | Ventil |
| 68 - | Federelemente |

## Patentansprüche

1. Verfahren zur Herstellung eines mikrostrukturierten Verbundbauteils, die folgenden Schritte umfassend:
- Anordnen einer ersten Folie (01) über einer zweiten Folie (02) zwischen einem ersten Formbauteil (03) und einem zweiten Formbauteil (04), wobei das erste Formbauteil (03) und/oder das zweite Formbauteil (04) mikrostrukturierte auszufüllende Hohlformen (06; 07) aufweist;
- Erwärmen des erstes Formbauteiles (03) und des zweiten Formbauteiles (04), um vermittelt darüber die erste Folie (01) und die zweite Folie (02) zu erwärmen;
- Schaffen eines Überdruckes zwischen der ersten Folie (01) und der zweiten Folie (02), um die erste Folie (01) und/oder die zweite Folie (02) in die mikrostrukturierten auszufüllenden Hohlformen (06; 07) zu drängen, wobei der Überdruck höher als ein das erste Formbauteil (03) und das zweite Formbauteil (04) umgebender Druck ist;
- Zusammenpressen des ersten Formbauteiles (03) und des zweiten Formbauteiles (04) mit der dazwischen angeordneten ersten Folie (01) und der dazwischen angeordneten zweiten Folie (02) durch eine Presskraft (08; 13), um sich berührende Bereiche der Oberflächen zwischen der ersten Folie (01) und dem ersten Formbauteil (03), zwischen der zweiten Folie (02) und dem zweiten Formbauteil (04) und zwischen der ersten Folie (01) und der zweite Folie (02) stoffschlüssig miteinander zu verbinden; und
- Abkühlen des erstes Formbauteiles (03), des zweitens Formbauteiles (04), der ersten Folie (01) und der zweiten Folie (02), womit das mikrostrukturierte Verbundbauteil gebildet ist.

2. Verfahren nach Anspruch 1, **dadurch gekennzeichnet, dass** ein Thermoplast als Material für die erste Folie (01) und für die zweite Folie (02) verwendet wird.

3. Verfahren nach Anspruch 2, **dadurch gekennzeichnet, dass** das Erwärmen der ersten Folie (01) und der zweiten Folie (02) mindestens bis zu einer Glasübergangstemperatur des Thermoplasts erfolgt.

4. Verfahren nach einem der Ansprüche 1 bis 3, **dadurch gekennzeichnet, dass** die erste Folie (01) und die zweite Folie (02) vor dem Anordnen zwischen dem ersten Formbauteil (03) und dem zweiten Formbauteil (04) vorstruktiert werden.

5. Verfahren nach einem der Ansprüche 1 bis 4, **dadurch gekennzeichnet, dass** beim Anordnen der ersten Folie (01) über der zweiten Folie (02) Funktionselemente (24; 36) und/oder eine dritte Folie (21; 22; 38; 39; 43) zwischen der ersten Folie (01) und der zweiten Folie (02) angeordnet wird.

6. Verfahren nach einem der Ansprüche 1 bis 5, **dadurch gekennzeichnet, dass** das erste Formbauteil (03) und/oder das zweite Formbauteil (04) nach dem Abkühlen mit einer oder mehreren Ausnehmungen (31; 32; 41) versehen werden, um die erste Folie (01) und/oder die zweite Folie (02) im Bereich der einen oder der mehreren Ausnehmungen (31; 32; 41) freizulegen.

7. Verfahren nach einem der Ansprüche 1 bis 6, **dadurch gekennzeichnet, dass** das erste Formbauteil (03) und/oder das zweite Formbauteil (04) nach dem Abkühlen entfernt werden.

8. Vorrichtung zur Herstellung mikrostrukturierter Verbundbauteile, umfassend:
- ein erstes Joch (51) zur Aufnahme eines ersten Formbauteiles (03);
- ein zweites Joch (52) zur Aufnahme eines dem ersten Formbauteil (03) gegenüberstehenden zweiten Formbauteiles (04);
- eine Krafteinleitungsvorrichtung (53) zur Einleitung einer Kraft (08; 13) zum Pressen des ersten Joches (51) in Richtung des zweites Joches (52);
- eine Überdruckpumpe (66) zur Erzeugung eines Überdruckes in einem Hohlraum zwischen zwei zwischen dem ersten Formbauteil (03) und dem zweiten Formbauteil (04) anzuordnenden Folien (01, 02);
- eine Heizvorrichtung zum Erwärmen zumindest eines Übergangsbereiches zwischen dem ersten Formbauteil (03) und dem zweiten Formbauteil (04); und
- eine Folienaufnahme (58, 62, 63) zur umfänglichen Aufnahme der beiden Folien (01, 02), wobei die Folienaufnahme (58, 62, 63) einen das erste Formbauteil (03) und das zweite Formbauteil (04) umfänglich umschließenden Distanzring (58), einen Druckring (62) und einen Bodenring (63) umfasst, wobei der Distanzring (58) auf den Bodenring (63) aufsetzbar ist und eine Öffnung (64) zum Anschluss der Überdruckpumpe (66) aufweist, und wobei der Druckring (62) auf den Distanzring (58) aufsetzbar ist.

9. Vorrichtung nach Anspruch 8, **dadurch gekennzeichnet, dass** sie weiterhin ein Gehäuse (54) umfasst, in welchem zumindest das erste Joch (51) und das zweite Joch (52) angeordnet sind, wobei das Gehäuse (54) mit einer Unterdruckpumpe (57) zur Erzeugung eines Unterdruckes im Gehäuse (54) verbunden ist.

10. Vorrichtung nach Anspruch 8 oder 9, **dadurch gekennzeichnet, dass** der Druckring (62) über eine Feder (68) durch die Krafteinleitungsvorrichtung (53) mit einer Kraft (08; 13) in Richtung des auf dem Bodenring (63) aufsitzenden Distanzringes (58) beaufschlagbar ist.

11. Vorrichtung nach einem der Ansprüche 8 bis 10, **dadurch gekennzeichnet, dass** sie weiterhin eine Dichtungsanordnung (59, 61) zum umfänglichen Abdichten der beiden Folien (01, 02) umfasst.

12. Mit einem Verfahren nach einem der Ansprüche 1 bis 7 hergestelltes mikrostrukturiertes Verbundbauteil, mit dem ersten Formbauteil (03) und mit dem über dem ersten Formbauteil (03) angeordneten zweiten Formbauteil (04), sowie mit der ersten Folie (01) und mit der zweite Folie (02), die gemeinsam ein Verbindungselement zwischen dem ersten Formbauteil (03) und dem zweiten Formbauteil (04) bilden, wobei die erste Folie (01) und/oder die zweite Folie (02) Mikrostrukturen (17) aufweist, die in die mikrostrukturierten Hohlformen (06, 07) im ersten Formbauteil (03) und/oder im zweiten Formbauteil (04) ausgeformt sind.

13. Mikrostrukturiertes Verbundbauteil nach Anspruch 12,
**dadurch gekennzeichnet, dass** zwischen der ersten Folie (01) und der zweiten Folie (02) eine dritte Folie (21; 22; 38; 39; 43) und/oder Funktionselemente (24; 36) angeordnet sind.

14. Mikrostrukturiertes Verbundbauteil nach Anspruch 12 oder 13, **dadurch gekennzeichnet, dass** das erste Formbauteil (03) und/oder das zweite Formbauteil (04) eine oder mehrere Ausnehmungen (31; 32; 41) aufweist, durch welche die erste Folie (01) und/oder die zweite Folie (02) im Bereich der einen oder der mehreren Ausnehmungen (31; 32; 41) freigelegt ist.

15. Mikrostrukturiertes Verbundbauteil nach einem der Ansprüche 12 bis 14, **dadurch gekennzeichnet, dass** Außenflächen (14) des ersten Formbauteiles (03) und/oder des zweiten Formbauteiles (04) durch die erste Folie (01) und/oder die zweite Folie (02) bedeckt sind, wodurch die Außenflächen (14) laminiert sind.

## Claims

1. A method for manufacturing a microstructured composite component, comprising the following steps:
- arranging a first foil (01) over a second foil (02) between a first mould component (03) and a second mould component (04), wherein the first mould component (03) and/or the second mould component (04) comprises microstructured hollow shapes (06; 07) to be filled in;
- heating the first mould component (03) and the second mould component (04) in order to, conveyed over it, heat the first foil (01) and the second foil (02);
- creating an overpressure between the first foil (01) and the second foil (02) in order to force the first foil (01) and/or the second foil (02) into the microstructured hollow shapes (06; 07) to be filled in, wherein the overpressure is greater than a pressure surrounding the first mould component (03) and the second mould component (04);
- pressing together the first mould component (03) and the second mould component (04) with the first foil (01) arranged in-between, and with the second foil (02) arranged in-between, by means of a pressing force (08; 13) in order to integrally interconnect contacting regions of the surfaces between the first foil (01) and the first mould component (03), between the second foil (02) and the second mould component (04) and between the first foil (01) and the second foil (02); and
- cooling the first mould component (03), the second mould component (04), the first foil (01) and the second foil (02), whereby the microstructured composite component has been formed.

2. The method according to claim 1, **characterised in that** a thermoplastic is used as a material for the first foil (01) and for the second foil (02).

3. The method according to claim 2, **characterised in that** heating the first foil (01) and the second foil (02) takes place at least to a glass transition temperature of the thermoplastic.

4. The method according to any one of claims 1 to 3, **characterised in that** the first foil (01) and the second foil (02) are prestructured prior to being arranged between the first mould component (03) and the second mould component (04).

5. The method according to any one of claims 1 to 4, **characterised in that** during arrangement of the first foil (01) above the second foil (02), functional elements (24; 36) and/or a third foil (21; 22; 38; 39; 43) are arranged between the first foil (01) and the second foil (02).

6. The method according to any one of claims 1 to 5, **characterised in that** after cooling has taken place the first mould component (03) and/or the second mould component (04) are provided with one or several recess/es (31; 32; 41) in order to expose the first foil (01) and/or the second foil (02) in the region of the one or of the several recess/es (31; 32; 41).

7. The method according to any one of claims 1 to 6, **characterised in that** the first mould component (03) and/or the second mould component (04) are/is removed after cooling.

8. A device for manufacturing microstructured composite components, comprising:
- a first yoke (51) for receiving a first mould component (03);
- a second yoke (52) for receiving a second mould component (04) that is arranged opposite the first mould component (03);
- a force introduction device (53) for introducing a force (08; 13) for pressing the first yoke (51) in the direction of the second yoke (52);
- an overpressure pump (66) for generating an overpressure in a void between two foils (01, 02) to be arranged between the first mould component (03) and the second mould component (04);
- heating apparatus for heating at least one transition region between the first mould component (03) and the second mould component (04); and
- a foil receiving device (58, 62, 63) for circumferentially receiving the two foils (01, 02), wherein the foil receiving device (58, 62, 63) comprises a spacer ring (58) that circumferentially encloses the first mould component (03) and the second mould component (04), and further comprises a pressure ring (62) and a bottom ring (63), wherein the spacer ring (58) can be placed onto the bottom ring (63) and comprises an opening (64) for connecting the overpressure pump (66), and wherein the pressure ring (62) can be placed onto the spacer ring (58).

9. The device according to claim 8, **characterised in that** it furthermore comprises a housing (54) in which at least the first yoke (51) and the second yoke (52) are arranged, wherein the housing (54) is connected to a vacuum pump (57) for generating a vacuum in the housing (54).

10. The device according to claim 8 or 9, **characterised in that** by means of a spring (68) the pressure ring (62) can be subjected, by the force introduction device (53), to a force (08; 13) in the direction of the spacer ring (58) that is seated on the bottom ring (63).

11. The device according to any one of claims 8 to 10, **characterised in that** it furthermore comprises a sealing arrangement (59, 61) for circumferentially sealing the two foils (01, 02).

12. A microstructured composite component manufactured by means of a method according to any one of claims 1 to 7, with the first mould component (03) and with the second mould component (04) that is arranged above the first mould component (03), and with the first foil (01) and with the second foil (02), which together form a connection element between the first mould component (03) and the second mould component (04), wherein the first foil (01) and/or the second foil (02) comprise/s microstructures (17) that are formed in the microstructured hollow shapes (06, 07) in the first mould component (03) and/or in the second mould component (04).

13. The microstructured composite component according to claim 12, **characterised in that** between the first foil (01) and the second foil (02) a third foil (21; 22; 38; 39; 43) and/or functional elements (24; 36) are arranged.

14. The microstructured composite component according to claim 12 or 13, **characterised in that** the first mould component (03) and/or the second mould component (04) comprise/s one or several recesses (31; 32; 41) through which the first foil (01) and/or the second foil (02) are/is exposed in the region of the one or of the several recess/es (31; 32; 41).

15. The microstructured composite component according to any one of claims 12 to 14, **characterised in that** outer surfaces (14) of the first mould component (03) and/or of the second mould component (04) are covered by the first foil (01) and/or by the second foil (02), whereby the outside surfaces (14) are laminated.

## Revendications

1. Procédé de fabrication d'une pièce composite microstructurée, comprenant les étapes suivantes :
- agencement d'un premier film (01) sur un deuxième film (02) entre une première pièce moulée (03) et une deuxième pièce moulée (04), sachant que la première pièce moulée (03) et/ou la deuxième pièce moulée (04) présente(nt) des formes creuses microstructurées (06 ; 07) à remplir ;
- réchauffement de la première pièce moulée (03) et de la deuxième pièce moulée (04) afin de réchauffer indirectement dessus le premier film (01) et le deuxième film (02) ;
- création d'une surpression entre le premier film (01) et le deuxième film (02) pour pousser le premier film (01) et/ou le deuxième film (02) dans les formes creuses microstructurées (06 ; 07) à remplir, sachant que la surpression est supérieure à une pression autour de la première pièce moulée (03) et de la deuxième pièce moulée (04) ;
- compression de la première pièce moulée (03) et de la deuxième pièce moulée (04) avec le premier film (01) disposé entre et le deuxième film (02) disposé entre par une force de compression (08 ; 13) pour relier des parties qui se touchent des surfaces entre le premier film (01) et la première pièce moulée (03), entre le deuxième film (02) et la deuxième pièce moulée (04) et entre le premier film (01) et le deuxième film (02), par liaison de matière entre elles ; et
- refroidissement de la première pièce moulée (03), de la deuxième pièce moulée (04), du premier film (01) et du deuxième film (02), ce par quoi la pièce composite microstructurée est formée.

2. Procédé selon la revendication 1, **caractérisé en ce qu'**un thermoplastique est employé comme matériau pour le premier film (01) et pour le deuxième film (02).

3. Procédé selon la revendication 2, **caractérisé en ce que** le réchauffement du premier film (01) et du deuxième film (02) s'effectue au moins jusqu'à une température de transition vitreuse du thermoplastique.

4. Procédé selon l'une des revendications 1 à 3, **caractérisé en ce que** le premier film (01) et le deuxième film (02) sont préstructurés avant l'agencement entre la première pièce moulée (03) et la deuxième pièce moulée (04).

5. Procédé selon l'une des revendications 1 à 4, **caractérisé en ce que** lors de l'agencement du premier film (01) sur le deuxième film (02), des éléments fonctionnels (24 ; 36) et/ou un troisième film (21 ; 22 ; 38 ; 39 ; 43) est/sont disposé(s) entre le premier film (01) et le deuxième film (02) .

6. Procédé selon l'une des revendications 1 à 5, **caractérisé en ce que** la première pièce moulée (03) et/ou la deuxième pièce moulée (04) est/sont dotée(s) après le refroidissement d'un ou plusieurs évidement(s) (31 ; 32 ; 41) pour le premier film (01) et/ou le deuxième film (02) au niveau de l'un ou de la pluralité d'évidement(s) (31 ; 32 ; 41) .

7. Procédé selon l'une des revendications 1 à 6, **caractérisé en ce que** la première pièce moulée (03) et/ou la deuxième pièce moulée (04) est/sont retirée(s) après le refroidissement.

8. Dispositif destiné à la fabrication de pièces composites microstructurées, comprenant :
- une première travée (51) pour recevoir une première pièce moulée (03) ;
- une deuxième travée (52) pour recevoir une deuxième pièce moulée (04) faisant face à la première pièce moulée (03) ;
- un dispositif d'introduction de force (53) pour introduire une force (08 ; 13) pour appuyer la première travée (51) en direction de la deuxième travée (52) ;
- une pompe de suralimentation (66) pour produire une surpression dans un espace creux entre deux films (01, 02) à disposer entre la première pièce moulée (03) et la deuxième pièce moulée (04) ;
- un dispositif de chauffage pour réchauffer au moins une zone de transition entre la première pièce moulée (03) et la deuxième pièce moulée (04) ; et
- une réception de film (58, 62, 63) pour la réception du pourtour des deux films (01, 02), sachant que la réception de film (58, 62, 63) comprend une bague d'écartement (58) entourant le pourtour de la première pièce moulée (03) et de la deuxième pièce moulée (04), une bague de serrage (62) et une bague de fond (63), sachant que la bague d'écartement (58) peut être placée sur la bague de fond (63) et présente une ouverture (64) pour raccorder la pompe de suralimentation (66) et sachant que la bague de serrage (62) peut être placée sur la bague d'écartement (58) .

9. Dispositif selon la revendication 8, **caractérisé en ce qu'**il comprend en outre un logement (54) dans lequel au moins la première travée (51) et la deuxième travée (52) sont disposées, sachant que le logement (54) est relié à une pompe à vide (57) pour produire un vide dans le boitier (54).

10. Dispositif selon la revendication 8 ou 9, **caractérisé en ce que** la bague de serrage (62) peut recevoir une force (08 ; 13) par le dispositif d'introduction de force (53), via un ressort (68), en direction de la bague d'écartement (58) reposant sur la bague de fond (63).

11. Dispositif selon l'une des revendications 8 à 10, **caractérisé en ce qu'**il comprend en outre un agencement de joints (59, 61) pour l'étanchéification du pourtour des deux films (01, 02).

12. Pièce composite microstructurée fabriquée par un procédé selon l'une des revendications 1 à 7, comprenant la première pièce moulée (03) et la deuxième pièce moulée (04) disposée au-dessus de la première pièce moulée (03), ainsi qu'avec le premier film (01) et le deuxième film (02) qui forment ensemble un élément de liaison entre la première pièce moulée (03) et la deuxième pièce moulée (04), sachant que le premier film (01) et/ou le deuxième film (02) présentent des microstructures (17) qui sont formées dans les formes creuses microstructurées (06 ; 07) dans la première pièce moulée (03) et/ou la deuxième pièce moulée (04).

13. Pièce composite microstructurée selon la revendication 12, **caractérisée en ce que** des éléments fonctionnels (24 ; 36) et/ou un troisième film (21 ; 22 ; 38 ; 39 ; 43) est/sont disposé(s) entre le premier film (01) et le deuxième film (02) .

14. Pièce composite microstructurée selon la revendication 12 ou 13, **caractérisée en ce que** la première pièce moulée (03) et/ou la deuxième pièce moulée (04) présente(nt) un ou plusieurs évidement(s) (31 ; 32 ; 41) par lequel/lesquels le premier film (01) et/ou le deuxième film (02) est/sont enlevé(s) au niveau de l'un ou de la pluralité d'évidement(s) (31 ; 32 ; 41).

15. Pièce composite microstructurée selon l'une des revendications 12 à 14, **caractérisée en ce que** des surfaces extérieures (14) de la première pièce moulée (03) et/ou de la deuxième pièce moulée (04) sont recouvertes par le premier film (01) et/ou le deuxième film (02), ce par quoi les surfaces extérieures (14) sont laminées.
